# EUROPÄISCHE PATENTANMELDUNG

(11) **EP 4 516 553 A1**
(43) Veröffentlichungstag der Anmeldung: **05.03.2025**
(21) Anmeldenummer: 24176971.0
(22) Anmeldetag: 21.05.2024
(51) Int. Cl.: B60K 23/08

(54) **VERFAHREN ZUM BETRIEB EINER ALLRADGETRIEBENEN LANDWIRTSCHAFTLICHEN ARBEITSMASCHINE**

(30) Priorität: 07.07.2023 DE 102023117970
(71) Anmelder: CLAAS Tractor S.A.S., 78141 Vélizy-Villacoublay Cedex (FR)
(72) Erfinder: Fedde, Thomas, 33129 Delbrück (DE); Wecker, Timo, 33181 Bad Wünnenberg (DE)
(74) Vertreter: CLAAS 365FarmNet GmbH

(57) **Zusammenfassung**

Die vorliegende Erfindung betrifft ein Verfahren zum Betrieb einer allradgetriebenen landwirtschaftlichen Arbeitsmaschine (1), mit einer Vorderachse (2) und einer angetriebenen Hinterachse (3), wobei die Vorderachse (2) für einen Allradbetrieb durch eine Kupplung (14) zugeschaltet wird, wobei die Kupplung (14) durch eine Steuerungsvorrichtung (17) angesteuert wird, wobei während des Betriebs der landwirtschaftlichen Arbeitsmaschine (1) eine Fahrsituation (Q1, Q2, Q3, Q4) durch eine Auswertung von Fahrsignalen und von Signalen, durch die auf das Auftreten von Schubkräften (F_{S}) oder Zugkräften (F_{Z}) an der landwirtschaftlichen Arbeitsmaschine (1) geschlossen wird, detektiert wird, und dass in Abhängigkeit von der bestimmten Fahrsituation (Q1, Q2, Q3, Q4) die Kupplung (14) zur Zuschaltung und Abschaltung des Allradbetriebes automatisch angesteuert wird.

## Beschreibung

Die vorliegende Erfindung betrifft ein Verfahren zum Betrieb einer allradgetriebenen landwirtschaftlichen Arbeitsmaschine, insbesondere eines Traktors, gemäß dem Oberbegriff des Anspruches 1. Weiterhin ist eine landwirtschaftliche Arbeitsmaschine nach Anspruch 14 Gegenstand der Erfindung.

Ein Verfahren der eingangs genannten Art ist aus der DE 10 2015 212 897 A1 bekannt. Dort sind ein Verfahren und eine Einrichtung zum Betrieb einer allradgetriebenen landwirtschaftlichen Arbeitsmaschine beschrieben, welches eine fahrerunabhängige Deaktivierung des Allradbetriebs erlaubt. Die allradgetriebene landwirtschaftliche Arbeitsmaschine umfasst eine angetriebene Hinterachse sowie eine zur Durchführung des Allradbetriebs zuschaltbare Vorderachse. Eine Kontrolleinheit ermittelt während des Allradbetriebs eine Vorderradschlupfgröße, die einen an der Vorderachse der landwirtschaftlichen Arbeitsmaschine auftretenden Antriebsradschlupf charakterisiert, wobei die Kontrolleinheit den Allradbetrieb fahrerunabhängig deaktiviert, wenn diese erkennt, dass die ermittelte Vorderradschlupfgröße größer ist als ein vorgegebener Schwellenwert.

Ausgehend vom vorstehend genannten Stand der Technik liegt der Erfindung die Aufgabe zugrunde, ein Verfahren zum Betrieb einer allradgetriebenen landwirtschaftlichen Arbeitsmaschine sowie eine landwirtschaftliche Arbeitsmaschine der eingangs genannten Art weiterzubilden, die sich durch eine verbesserte automatisierte Ansteuerung der Kupplung unter Berücksichtigung von unterschiedlichen Fahrsituationen auszeichnet.

Diese Aufgabe wird erfindungsgemäß durch ein Verfahren mit den Merkmalen des Anspruches 1 gelöst. Vorteilhafte Weiterbildungen sind Gegenstand der hiervon abhängigen Ansprüche.

Gemäß dem Anspruch 1 wird ein Verfahren zum Betrieb einer allradgetriebenen landwirtschaftlichen Arbeitsmaschine, mit einer angetriebenen Hinterachse und einer Vorderachse, welche für einen Allradbetrieb durch eine Kupplung zugeschaltet wird, vorgeschlagen, wobei die Kupplung durch eine Steuerungsvorrichtung angesteuert wird. Erfindungsgemäß ist vorgesehen, dass während des Betriebs der landwirtschaftlichen Arbeitsmaschine eine Fahrsituation durch eine Auswertung von Fahrsignalen und von Signalen, durch die auf das Auftreten von Schubkräften oder Zugkräften an der landwirtschaftlichen Arbeitsmaschine geschlossen wird, detektiert wird, und dass in Abhängigkeit von der bestimmten Fahrsituation die Kupplung zur Zuschaltung und Abschaltung des Allradbetriebes automatisch angesteuert wird.

Der Erfindung liegt die Überlegung zugrunde, dass durch eine automatische Ansteuerung der bei landwirtschaftlichen Arbeitsmaschinen insbesondere als nasslaufende Lamellenkupplung ausgeführten Kupplung für eine Zuschaltung und Abschaltung des Allradbetriebes die bestehende Fahrsituation berücksichtigt wird, um Fahrsituationen zu erkennen, in denen es unterschiedlicher Raddrehzahlen am Vorderachse und Hinterachse bedarf, welche durch diese Art Antriebsstrang nicht darstellbar sind. Hierdurch wird die für die Zuschaltung und Abschaltung vorgesehene Kupplung von der Steuerungsvorrichtung an die detektierte Fahrsituation angepasst angesteuert, um Verspannungen im Antriebsstrang zu vermeiden. Die automatische Berücksichtigung der Fahrsituation bei der Entscheidung über die Zuschaltung oder Abschaltung des Allradbetriebes führt dazu, dass eine aus den Verspannungen im Antriebsstrang resultierende Blindleistung sowie ein erhöhter Verschleiß von Komponenten des Antriebsstranges vermieden werden können. Insbesondere wird ein Bediener der Arbeitsmaschine von der manuellen Betätigung des Allradbetriebs entlastet, die eine Beurteilung der Fahrsituation bedingt, wann der Allradbetrieb sinnvoll ist und wann nicht. Dies ist insbesondere für unerfahrene Bediener von Vorteil. Zudem kann der Fahrkomfort durch Reduzierung des Rucks beim Öffnen eines verspannten Antriebsstrangs erhöht werden.

Unter dem Begriff "Fahrsignal" wird insbesondere die aktuelle Fahrgeschwindigkeit bei Vorwärtsfahrt und bei Rückwärtsfahrt sowie die Fahrtrichtung verstanden. Weitere Fahrsignale können darüber hinaus weitere Betriebsparameter der Arbeitsmaschine sein, welche Einfluss auf die Fahrsituation haben.

Insbesondere kann die Kupplung druckgesteuert ausgeführt sein. Zur Zuschaltung des Allradbetriebes wird die Kupplung in eine geschlossene Position überführt und zur Abschaltung des Allradbetriebes durch Druckbeaufschlagung in eine geöffnete Position.

Insbesondere kann die Kupplung proportional druckgesteuert ausgeführt sein, vorzugsweise durch ein Proportionalventil.

Bevorzugt kann in einer detektierten Fahrsituation, in welcher eine detektierte Fahrgeschwindigkeit als Fahrsignal innerhalb eines ersten, den Stillstand der landwirtschaftlichen Arbeitsmaschine umfassenden fahrtrichtungsunabhängigen Geschwindigkeitsbereichs liegt, die Kupplung angesteuert werden, um den Allradbetrieb durchgängig zuzuschalten. Der erste Geschwindigkeitsbereich umfasst die Fahrsituation mit Fahrgeschwindigkeiten bei Vorwärtsfahrt und Rückwärtsfahrt, in welchen durch die Zuschaltung des Allradbetriebs eine maximale Traktion der Arbeitsmaschine erreicht werden soll. Eine solche Fahrsituation kann beispielsweise im Stillstand und beim Anfahren vorliegen.

Weiterhin kann in einer detektierten Fahrsituation, in welcher eine detektierte Fahrgeschwindigkeit als Fahrsignal oberhalb einer fahrtrichtungsunabhängigen Grenzgeschwindigkeit liegt, die Kupplung angesteuert werden, um den Allradbetrieb durchgängig abzuschalten. Eine Fahrsituation mit Fahrgeschwindigkeiten oberhalb der fahrtrichtungsunabhängigen Grenzgeschwindigkeit liegt beispielsweise bei einer Straßenfahrt vor, insbesondere bei Fahrgeschwindigkeiten oberhalb von 16 km/h.

Des Weiteren kann in einer detektierten Fahrsituation, in welcher die detektierte Fahrgeschwindigkeit bei Vorwärtsfahrt innerhalb eines zweiten Geschwindigkeitsbereichs liegt, welcher oberhalb des ersten Geschwindigkeitsbereichs und unterhalb der Grenzgeschwindigkeit liegt, und eine auf die landwirtschaftliche Arbeitsmaschine ausgeübte Schubkraft detektiert wird, die Kupplung angesteuert werden, um den Allradbetrieb zuzuschalten. Eine Schubkraft kann beispielsweise bereits bei einer Bergabfahrt der Arbeitsmaschine mit oder ohne Anbaugerät auftreten. Schubkräfte treten bei einem Gespann aus der landwirtschaftlichen Arbeitsmaschine und einem von dieser mitgeführten Anbaugerät auf. Das Anbaugerät kann beispielsweise über eine Geräteschnittstelle wie einen Heckkraftheber oder einen Frontkraftheber mit der Arbeitsmaschine verbunden sein. Die Arbeitsmaschine kann zusätzlich oder alternativ ein Anbaugerät in Form eines Anhängers ziehen. In Fahrsituationen, in welchen bei Vorwärtsfahrt mit einer Fahrgeschwindigkeit innerhalb des zweiten Geschwindigkeitsbereichs eine Schubkraft auftritt, ist die maximale Traktion sinnvoll, um eine bestmögliche Kontrolle über das Gespann zu behalten.

Weiterhin kann in einer detektierten Fahrsituation, in welcher die detektierte Fahrgeschwindigkeit bei Rückwärtsfahrt innerhalb eines zweiten Geschwindigkeitsbereichs liegt, welcher oberhalb des ersten Geschwindigkeitsbereichs und unterhalb der Grenzgeschwindigkeit liegt, und eine auf die landwirtschaftliche Arbeitsmaschine ausgeübte Zugkraft detektiert wird, die Kupplung angesteuert werden, um den Allradbetrieb zuzuschalten. Eine Zugkraft kann beispielsweise bei einer Bergauffahrt der Arbeitsmaschine insbesondere mit daran adaptiertem Anbaugerät auftreten. Auch in dieser Fahrsituation kann die maximale Traktion durch Zuschaltung des Allradbetriebs zur Erhaltung der Fahrstabilität sinnvoll sein. Weiter ist die maximale Traktion durch Zuschaltung des Allradbetriebs bei der Feldfahrt bzw. Feldbearbeitung als Fahrsituation sinnvoll.

Insbesondere kann in einer detektierten Fahrsituation, in welcher die detektierte Fahrgeschwindigkeit bei Vorwärtsfahrt innerhalb des zweiten Geschwindigkeitsbereichs liegt und eine auf die landwirtschaftliche Arbeitsmaschine ausgeübte Zugkraft detektiert wird oder in welcher die detektierte Fahrgeschwindigkeit bei Rückwärtsfahrt innerhalb des zweiten Geschwindigkeitsbereichs liegt und eine auf die landwirtschaftliche Arbeitsmaschine ausgeübte Schubkraft detektiert wird, eine Evaluierung anhand der detektierten Fahrsituation durchgeführt werden, um über die Ansteuerung der Kupplung zur Zuschaltung oder Abschaltung des Allradbetriebes zu entscheiden. In einer solchen Fahrsituation kann durch die Steuerungsvorrichtung evaluiert werden, ob eine Zuschaltung oder Abschaltung des Allradbetriebes sinnvoll ist, d.h. zu einer Verbesserung des Fahrverhaltens unter den bestehenden Bedingungen beitragen kann.

Dabei kann zur automatischen Evaluierung der Schaltzustand der Kupplung in der detektierten Fahrsituation bestimmt werden, wobei bei Detektion des geschlossenen Zustands der Kupplung ein Ventil, insbesondere ein Proportionalventil, von der Steuerungsvorrichtung angesteuert wird, um die Kupplung bis zum Auftreten von Kupplungsschlupf mit einem Kupplungsdruck zu beaufschlagen, wobei zur Bestimmung des Auftretens des Kupplungsschlupfs mittels zweier Drehzahlsensoren eine Primärdrehzahl und eine Sekundärdrehzahl gemessen und daraus durch die Steuerungsvorrichtung eine Differenzdrehzahl bestimmt wird. Die Primärdrehzahl wird hierzu eingangsseitig und die Sekundärdrehzahl ausgangsseitig der Kupplung bestimmt.

Weiterhin kann die Kupplung in Abhängigkeit von einem in der Steuerungsvorrichtung hinterlegten Drehzahlgrenzwert für die Differenzdrehzahl angesteuert werden, wobei bei Unterschreiten des Drehzahlgrenzwertes die Kupplung durch Druckbeaufschlagung weiter geöffnet wird und bei Überschreiten des Drehzahlgrenzwertes die Kupplung durch Druckreduzierung geschlossen wird.

Dadurch kann ein konstruktiver Vorlauf, der insbesondere für als Traktoren ausgeführte Arbeitsmaschinen üblich ist, berücksichtigt werden. Aufgrund des konstruktiven Vorlaufs resultiert auf geraden Wegstrecken ohne Zugkraft und mit einem Lenkwinkel von im Wesentlichen 0° eine Drehzahldifferenz von ca. 1% bis 5%. Dabei dreht die Sekundärseite, die Räder an der Vorderachse, um diesen Betrag langsamer als die Primärseite, die Räder an der Hinterachse. Es herrscht nur ein geringer Schlupf an den angetriebenen Rädern der Hinterachse, sodass dann der Zweiradantrieb sinnvoll ist und die Kupplung geöffnet wird, um den Allradbetrieb abzuschalten.

In einer vergleichbaren Fahrsituation, in welcher eine hohe Zugkraft auf die Arbeitsmaschine einwirkt, kann die Zugkraft bewirken, dass die Räder der Hinterachse einen höheren Schlupf aufweisen. Dies kann anhand der Differenzdrehzahl der Kupplung bestimmt werden, da die Primärseite zusätzlich zu dem konstruktiven Vorlauf um den entsprechenden zugkraftbedingten Schlupf der Räder der Hinterachse schneller dreht als die Räder der Vorderachse auf der Sekundärseite. Überschreitet die Differenzdrehzahl den Drehzahlgrenzwert, so würde die Kupplung wieder geschlossen werden, um den Allradbetrieb zuzuschalten.

Gemäß einer Weiterbildung kann ein Lenkwinkel bestimmt werden, durch den die automatische Evaluierung ausgelöst wird, wobei in Abhängigkeit von einem in der Steuerungsvorrichtung hinterlegten Lenkwinkelgrenzwert und bei Detektion des geschlossenen Zustands der Kupplung das Ventil von der Steuerungsvorrichtung angesteuert wird, um die Kupplung bis zum Auftreten von Kupplungsschlupf mit einem Kupplungsdruck zu beaufschlagen, wobei zur Bestimmung des Auftretens des Kupplungsschlupfs mittels der zwei Drehzahlsensoren die Primärdrehzahl und die Sekundärdrehzahl gemessen werden und von der Steuerungsvorrichtung eine Differenzdrehzahl bestimmt wird.

Insbesondere kann bei einer vom Lenkwinkel abhängigen Auslösung der Evaluierung die Kupplung geöffnet werden, wenn die detektierte Sekundärdrehzahl größer als die Primärdrehzahl ist. Dadurch wird auf eine Betriebssituation reagiert, in welcher die Räder auf der Sekundärseite beginnt sich schneller zu drehen als die Räder auf der Primärseite. Dabei ist der detektierte Lenkwinkel so groß, dass der etwaige Schlupf an den Rädern der Hinterachse nicht groß genug ist, um den Lenkwinkel zu kompensieren. Die Räder der Vorderachse müssen geometrisch bedingt größeren Spurkreisradien folgen als die Räder der Hinterachse, sodass die Räder der Vorderachse bei geöffneter Kupplung schneller drehen müssen als die Räder der Hinterachse. Dies kann im Ergebnis der Evaluierung zur Entscheidung führen, den Allradbetrieb durch die Ansteuerung der Kupplung abzuschalten.

Gemäß einer Weiterbildung kann zur automatischen Evaluierung der Fahrsituation der Schaltzustand der Kupplung in der detektierten Fahrsituation bestimmt werden, wobei bei Detektion des geschlossenen Zustands der Kupplung ein Proportionalventil von der Steuerungsvorrichtung angesteuert wird, um die Kupplung zyklisch mit einem sich ändernden Kupplungsdruck zu beaufschlagen, bis die sich öffnende Kupplung schlupft, und dass der den Schlupf auslösende Kupplungsdruck mit einem in der Steuerungsvorrichtung hinterlegten Druck-Drehmoment-Verlauf der Kupplung verglichen wird, um das übertragbare Drehmoment zu bestimmen. Ein regelmäßiges Öffnen der Kupplung bildet eine Option, wenn Parameter wie die Drehzahldifferenz oder der Lenkwinkel nicht vorhanden oder nicht eindeutig sind. Tritt bei einem stufenweise oder kontinuierlich veränderten Kupplungsdruck Schlupf an der Kupplung auf, kann sie noch ein definiertes Drehmoment übertragen, welches aus dem Druck-Drehmoment-Verlauf der Kupplung bestimmbar ist. Ist das bei einsetzendem Schlupf übertragbare Drehmoment entsprechend hoch, kann die Kupplung geschlossen werden, ohne dass die Differenzdrehzahl der Kupplung betrachtet werden muss. Dies führt zu weniger Traktionsverlust und einer kürzeren Schlupfzeit, d.h. einem sinkenden Verschleiß, der Kupplung.

Die Evaluierung wird in regelmäßigen Zeitabständen während des Allradbetriebs durchgeführt, um Verschleiß zu reduzieren und die Effizienz zu steigern.

Insbesondere können durch die regelmäßige Evaluierung in einer der detektierten Fahrsituationen, in welcher die detektierte Fahrgeschwindigkeit bei Vorwärtsfahrt innerhalb des zweiten Geschwindigkeitsbereichs liegt und eine auf die landwirtschaftliche Arbeitsmaschine ausgeübte Zugkraft detektiert wird oder in welcher die detektierte Fahrgeschwindigkeit bei Rückwärtsfahrt innerhalb des zweiten Geschwindigkeitsbereichs liegt und eine auf die landwirtschaftliche Arbeitsmaschine ausgeübte Schubkraft detektiert wird, die Zeiten reduziert werden, in denen der Allradbetrieb fälschlich aktiviert ist.

Anspruch 12 betrifft die Möglichkeit der Evaluierung der spezifischen Fahrsituation innerhalb des zweiten Geschwindigkeitsbereichs bei bereits geschlossener Kupplung, sodass eine Modulation des Kupplungsdrucks nicht durchführbar ist, um die sich dabei einstellende Differenzdrehzahl zu bewerten.

Bevorzugt kann bei einem Zuschalten des Allradbetriebs ein von einem Antriebsmotor und/oder einem Fahrgetriebe bereitgestellter Indikator von der Steuerungsvorrichtung ausgewertet werden, durch welchen auf eine Änderung des Betriebszustands geschlossen wird, wobei für den zumindest einen Indikator ein Grenzwert in der Steuerungsvorrichtung hinterlegt ist, durch dessen Überschreiten die Evaluierung ausgelöst wird.

Hierzu wird eine Änderung des Schaltzustands der Kupplung vom geöffneten zum geschlossenen Schaltzustand detektiert, wobei der Wert des zumindest einen Indikators im Zeitpunkt des Schließens der Kupplung als Referenzwert gespeichert und mit nachfolgend bestimmten Werten des zumindest einen Indikators verglichen wird, welche während der Modulation des Kupplungsdrucks zur Evaluierung der Fahrsituation innerhalb des zweiten Geschwindigkeitsbereichs bestimmt werden.

Als zumindest ein Indikator kann ein Drehmoment am Fahrgetriebeausgang oder eine Motorauslastung bestimmt werden. Dabei kann es vorteilhaft sein, zusätzlich einen Neigungswinkel der Arbeitsmaschine zu bestimmen. Dies kann dann erforderlich sein, wenn die Richtung also das Vorzeichen der Last unbekannt ist. In dieser Situation können eine detektierte Neigung und die Fahrtrichtung Aufschluss darüber geben, ob es sich um eine Schublast oder eine Zuglast handelt.

Nach einer weiteren Lehre gemäß Anspruch 14, der eigenständige Bedeutung zukommt, wird eine landwirtschaftliche Arbeitsmaschine, insbesondere ein Traktor, mit einer angetriebenen Hinterachse und einer Vorderachse, welche für einen Allradbetrieb durch eine Kupplung zuschaltbar ist, sowie mit einer Steuerungsvorrichtung zur Ansteuerung der Kupplung, wobei die Steuerungsvorrichtung dazu eingerichtet ist, während des Betriebs der landwirtschaftlichen Arbeitsmaschine eine Fahrsituation durch eine Auswertung von Fahrsignalen und von Signalen, durch die auf das Auftreten von Schubkräften oder Zugkräften geschlossen wird, zu bestimmen und in Abhängigkeit von der bestimmten Fahrsituation die Kupplung zum Zuschalten und Abschalten automatisch anzusteuern, beansprucht. Auf die Vorteile des erfindungsgemäßen Verfahrens darf verwiesen werden.

Insbesondere ist die die Arbeitsmaschine zur Durchführung des Verfahrens nach einem der Ansprüche 1 bis 13 ausgeführt und eingerichtet.

Die vorliegende Erfindung wird nachstehend anhand eines in den Zeichnungen dargestellten Ausführungsbeispieles näher erläutert.

Es zeigen:
- Fig. 1: schematisch und exemplarisch eine Seitenansicht einer landwirtschaftlichen Arbeitsmaschine;
- Fig. 2: schematisch und exemplarisch eine Darstellung eines Antriebsstrangs der Arbeitsmaschine gemäß Fig. 1; und
- Fig. 3: ein Kraft-Geschwindigkeitsdiagramm zur Veranschaulichung unterschiedlicher Fahrsituationen der Arbeitsmaschine.

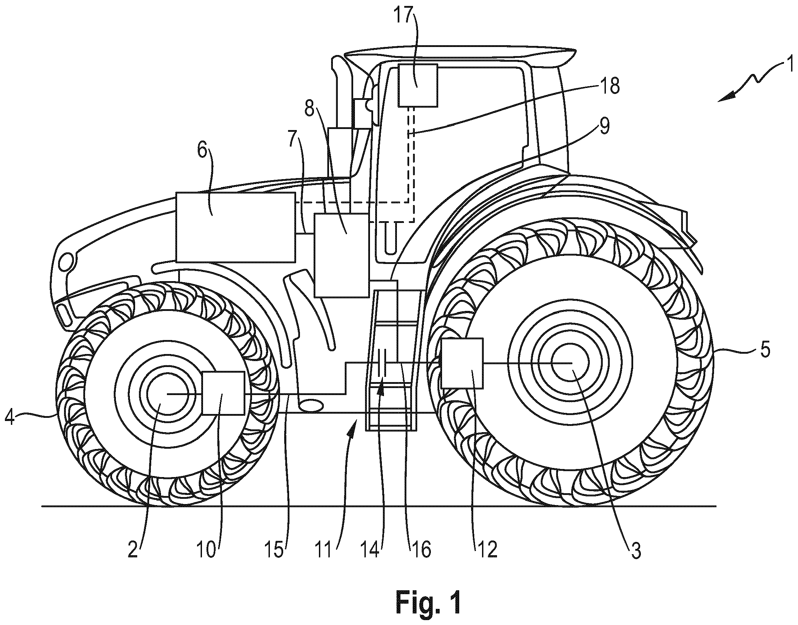

Die Darstellung in Fig. 1 zeigt schematisch und exemplarisch eine Seitenansicht einer landwirtschaftlichen Arbeitsmaschine 1, insbesondere eines Traktors. Die Arbeitsmaschine 1 umfasst eine Vorderachse 2 und eine Hinterachse 3. Zumindest die Vorderachse 2 ist als lenkbare Achse ausgeführt. An der Vorderachse 2 ist ein erstes Paar Reifen 4 angeordnet, an der Hinterachse 3 ist ein zweites Paar Reifen 5 angeordnet, wobei die Durchmesser der Reifen 4 an der Vorderachse 2 und der Reifen 5 an der Hinterachse voneinander abweichen können. Des Weiteren umfasst die Arbeitsmaschine 1 einen Antriebsmotor 6, welcher im Allgemeinen als ein Verbrennungsmotor ausgeführt ist. Der Antriebsmotor 6 ist durch eine Antriebswelle 7 mit einem Fahrgetriebe 8 verbunden. Das Fahrgetriebe 8 kann als ein eine stufenlos änderbare Abtriebsdrehzahl bereitstellendes Getriebe, ein sogenanntes hydrostatisch-mechanisch leistungsverzweigtes Getriebe, kurz CVT-Getriebe, ausgeführt sein. Über die Antriebswelle 7 wird das von dem Antriebsmotor 6 bereitgestellte Drehmoment auf das Fahrgetriebe 8 übertragen. Das Fahrgetriebe 8 ist durch eine Abtriebswelle 9 mit einem Antriebsstrang 11 verbunden, welcher der Übertragung eines von dem Fahrgetriebe 8 übersetzten Drehmomentes M und der Drehzahl wahlweise auf die Vorderachse 2 und/oder die Hinterachse 3 dient. Bevorzugt wird zumindest die Hinterachse 3 angetrieben. Der die Vorderachse 2 und die Hinterachse 3 verbindende Antriebsstrang 11 ist durch eine schaltbare Kupplung 14 unterbrechbar, so dass wahlweise nur die Hinterachse 3 oder im Allradbetrieb die Vorderachse 2 und die Hinterachse 3 durch den Antriebsmotor 6 antreibbar sind.

Der Antriebsstrang 11 umfasst weiterhin ein erstes Differential 10, welches mit der Vorderachse 2 trieblich verbunden ist, und ein zweites Differential 12, welches mit der Hinterachse 3 trieblich verbunden ist. Die zwischen den Differentialen 10, 12 angeordnete elektrohydraulisch betätigbare Kupplung 14 ist durch jeweils eine Welle 15, 16 dem ersten Differential 10 und dem zweiten Differential 12 angeordnet. Bevorzugt ist die Kupplung 14 als nasslaufende Lamellenkupplung ausgeführt.

Weiterhin umfasst die Arbeitsmaschine 1 eine Steuerungsvorrichtung 17, die unter anderem mit dem Antriebsmotor 6 sowie dem Fahrgetriebe 8 durch ein Bussystem 18 verbunden ist. Die Steuerungsvorrichtung 17 ist zur Ansteuerung des Antriebsmotors 6 sowie des Fahrgetriebes 8 eingerichtet.

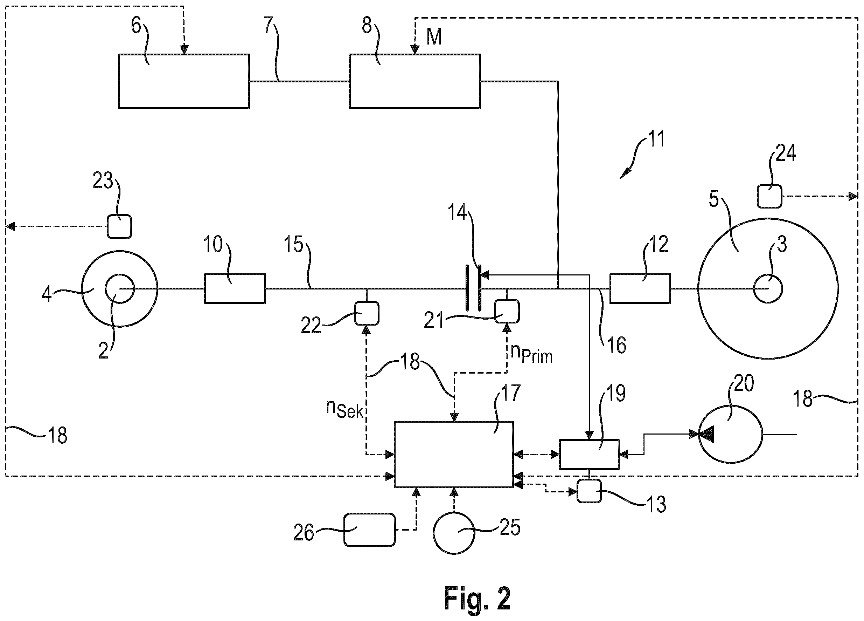

In Fig. 2 ist schematisch und exemplarisch eine Darstellung eines Antriebsstrangs der Arbeitsmaschine gemäß Fig. 1 gezeigt.

Zur Ansteuerung der Kupplung 14 ist ein elektrisch ansteuerbares Ventil 19, insbesondere Proportionalventil, vorgesehen, durch welches die Kupplung 14 mit einer unter Druck stehenden Hydraulikflüssigkeit durch eine Hydraulikversorgung 20 der Arbeitsmaschine 1 beaufschlagbar ist. Die druckgesteuerte Kupplung 14 befindet sich bei Zuschaltung des Allradbetriebes in einer geschlossenen Position wird zur Abschaltung des Allradbetriebes in eine geöffnete Position überführt.

Auf der Primärseite und auf der Sekundärseite der Kupplung 14 ist jeweils ein Drehzahlsensor 21, 22 angeordnet, welche der Erfassung einer Primärdrehzahl n_{Prim} und einer Sekundärdrehzahl n_{Sek} dienen. Die beiden Drehzahlsensoren 21, 22 sind durch das Bussystem 18 mit der Steuerungsvorrichtung 17 verbunden, welche die Signale der Drehzahlsensoren 21, 22 auswertet. Die Primärdrehzahl n_{Prim} wird hierzu eingangsseitig und die Sekundärdrehzahl n_{Sek} ausgangsseitig der Kupplung 14 bestimmt.

Weiterhin können den Rädern 4 der Vorderachse 2 und den Rädern 5 der Hinterachse 3 Sensoren 23, 24 zur Bestimmung der jeweiligen Raddrehzahl zugeordnet sein. Die von den Sensoren 23, 24 generierten Signale werden der Steuerungsvorrichtung 17 zur Auswertung zugeführt.

Des Weiteren kann die Steuerungsvorrichtung 17 zum Empfang und zur Auswertung eines Signals von einem Steuergerät des Fahrgetriebes 8 eingerichtet sein, aus welchem das ausgangsseitige Drehmoment M des Fahrgetriebes 8 bestimmbar ist, sowie eines Signals von einem Steuergerät des Antriebsmotors 6, aus welchem die prozentuale Motorauslastung bestimmbar ist. Weitere Signale können der Steuerungsvorrichtung 17 von einem Sensor 25 zur Bestimmung eines Lenkwinkels und/oder einem an der Arbeitsmaschine 1 angeordneten Neigungssensor 26 zur Auswertung bereitgestellt werden.

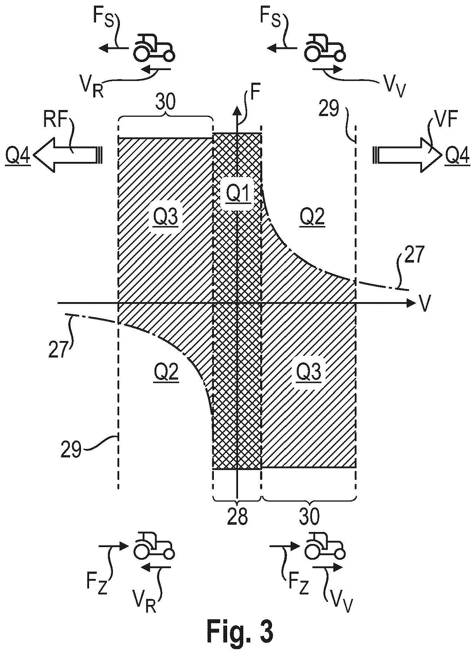

In Fig. 3 ist ein Kraft-Geschwindigkeitsdiagramm zur Veranschaulichung unterschiedlicher Fahrsituationen der Arbeitsmaschine 1 dargestellt. In dem Diagramm ist exemplarisch der jeweilige Verlauf einer Zugkrafthyperbel 27 für eine Vorwärtsfahrt VF als Fahrtrichtung der Arbeitsmaschine 1 bei auf die Arbeitsmaschine 1 einwirkender Schubkraft F_{S} sowie für eine Rückwärtsfahrt RF bei auf die Arbeitsmaschine 1 einwirkender Zugkraft F_{Z} dargestellt. Mit V_{V} ist eine Fahrgeschwindigkeit bei Vorwärtsfahrt VF und mit V_{R} eine Fahrgeschwindigkeit bei Rückwärtsfahrt FR bezeichnet.

Während des Betriebs der landwirtschaftlichen Arbeitsmaschine 1 wird eine von mehreren möglichen Fahrsituationen Q1, Q2, Q3, Q4 durch eine Auswertung von Fahrsignalen, Vorwärtsfahrgeschwindigkeit Vv und Rückwärtsfahrgeschwindigkeit V_{R} sowie Fahrtrichtung VF, VR, und von Signalen, durch die auf das Auftreten von Schubkräften F_{S} oder Zugkräften F_{Z} an der landwirtschaftlichen Arbeitsmaschine 1 geschlossen wird, detektiert. In Abhängigkeit von der bestimmten Fahrsituation Q1, Q2, Q3, Q4 wird die Kupplung 14 durch die Steuerungsvorrichtung 17 zur Zuschaltung und Abschaltung des Allradbetriebes automatisch angesteuert.

In einer detektierten Fahrsituation Q1, in welcher die detektierte Fahrgeschwindigkeit V_{V} oder V_{R} als Fahrsignal innerhalb eines ersten, den Stillstand der landwirtschaftlichen Arbeitsmaschine 1 umfassenden Geschwindigkeitsbereichs 28 liegt, wird die Kupplung 14 durch die Steuerungsvorrichtung 17 angesteuert, um den Allradbetrieb durchgängig zuzuschalten.

In einer detektierten Fahrsituation Q4, in welcher eine detektierte Fahrgeschwindigkeit V_{V}, V_{R} als Fahrsignal oberhalb einer fahrtrichtungsunabhängigen Grenzgeschwindigkeit 29 liegt, beispielsweise übe 16 km/h, wird die Kupplung 14 angesteuert, um den Allradbetrieb durchgängig abzuschalten.

In einer detektierten Fahrsituation Q3, in welcher die detektierte Fahrgeschwindigkeit V_{V} bei Vorwärtsfahrt VF innerhalb eines zweiten Geschwindigkeitsbereichs 30 liegt, welcher oberhalb des ersten Geschwindigkeitsbereichs 28 und unterhalb der Grenzgeschwindigkeit 29 liegt, und eine auf die landwirtschaftliche Arbeitsmaschine 1 ausgeübte Schubkraft F_{S} detektiert wird, oder in welcher die detektierte Fahrgeschwindigkeit V_{R} bei Rückwärtsfahrt RF innerhalb des zweiten Geschwindigkeitsbereichs 30 liegt, welcher oberhalb des ersten Geschwindigkeitsbereichs 28 und unterhalb der Grenzgeschwindigkeit 29 liegt, und eine auf die landwirtschaftliche Arbeitsmaschine 1 ausgeübte Zugkraft F_{Z} detektiert wird, wird die Kupplung 14 ebenfalls in der Weise angesteuert, dass der Allradbetrieb aktiv ist.

Der zweite Geschwindigkeitsbereich 30 in der Fahrsituation Q3 wird dabei in Abhängigkeit von der Fahrtrichtung VF, RF von dem jeweiligen Verlauf der Zugkrafthyperbel 27 beschränkt.

Erhöht sich die Fahrgeschwindigkeit Vv bzw. VR auf einen Wert oberhalb der Grenzgeschwindigkeit 29, wird die Kupplung 14 angesteuert, um den Allradbetrieb abzuschalten.

Wird in der Fahrsituation Q4 eine Bremsvorrichtung der Arbeitsmaschine 1 betätigt, wird der Allradbetrieb durch Ansteuerung der Kupplung 14 zugeschaltet, um wiederum die maximal mögliche Traktion zu erhalten.

In einer detektierten Fahrsituation Q2, in welcher die detektierte Fahrgeschwindigkeit V_{V} bei Vorwärtsfahrt VF innerhalb des zweiten Geschwindigkeitsbereichs 30 liegt und eine auf die landwirtschaftliche Arbeitsmaschine 1 ausgeübte Zugkraft F_{Z} detektiert wird oder in welcher die detektierte Fahrgeschwindigkeit V_{R} bei Rückwärtsfahrt R_{F} innerhalb des zweiten Geschwindigkeitsbereichs 30 liegt und eine auf die landwirtschaftliche Arbeitsmaschine 1 ausgeübte Schubkraft F_{S} detektiert wird, wird eine automatische Evaluierung durch die Steuerungsvorrichtung 17 anhand der detektierten Fahrsituation durchgeführt, um über die Ansteuerung der Kupplung 14 zur Zuschaltung oder Abschaltung des Allradbetriebes zu entscheiden. Die Fahrsituation Q2 stellt einen Übergangsbereich zu den Fahrsituationen Q1, Q3, Q4 dar, in welchem eine Abwägung über das Zuschalten oder Abschalten des Allradbetriebes vorgenommen wird.

Durch die automatische Evaluierung soll in der detektierten Fahrsituation Q2 bestimmt werden, ob der Allradbetrieb zur Unterstützung sinnvoll ist oder nicht.

Die automatische Evaluierung berücksichtigt dabei, welche Fahrsituation Q1, Q3, Q4 vor dem Übergang in die Fahrsituation Q2 bestand. Die Kupplung 14 ist beim Übergang von der Fahrsituation Q1 oder Q3 auf die Fahrsituation Q2 geschlossen, d.h. der Allradbetrieb ist aktiv. Beim Übergang von der Fahrsituation Q4 auf die Fahrsituation Q2 ist die Kupplung 14 geöffnet.

Zur automatischen Evaluierung wird der Schaltzustand der Kupplung 14 in der detektierten Fahrsituation Q2 bestimmt, wobei bei Detektion des geschlossenen Zustands der Kupplung 14 das Ventil 19 von der Steuerungsvorrichtung 17 angesteuert wird, um die Kupplung 14 bis zum Auftreten von Kupplungsschlupf mit einem Kupplungsdruck zu beaufschlagen. Zur Bestimmung des Auftretens des Kupplungsschlupfs wird mittels der beiden Drehzahlsensoren 21, 22 die Primärdrehzahl n_{Prim} und die Sekundärdrehzahl n_{Sek} gemessen und durch die Steuerungsvorrichtung 17 eine Differenzdrehzahl bestimmt wird.

Dabei wird die Kupplung 14 in Abhängigkeit von einem in der Steuerungsvorrichtung 17 hinterlegten Drehzahlgrenzwert für die Differenzdrehzahl angesteuert. Bei Unterschreiten des Drehzahlgrenzwertes wird die Kupplung 14 durch Druckbeaufschlagung weiter geöffnet und bei Überschreiten des Drehzahlgrenzwertes wird die Kupplung 14 durch Druckreduzierung geschlossen.

Zusätzlich oder alternativ kann vorgesehen sein, dass der vom Sensor 25 bestimmte Lenkwinkel herangezogen wird, um den Vorgang der automatischen Evaluierung auszulösen. Dabei kann in Abhängigkeit von einem in der Steuerungsvorrichtung 17 hinterlegten Lenkwinkelgrenzwert und bei Detektion des geschlossenen Zustands der Kupplung 14 das Ventil 19 von der Steuerungsvorrichtung 17 angesteuert werden, um die Kupplung 14 bis zum Auftreten von Kupplungsschlupf mit einem Kupplungsdruck zu beaufschlagen. Auch hier wird zur Bestimmung des Auftretens des Kupplungsschlupfs mittels der beiden Drehzahlsensoren 21, 22 die Primärdrehzahl n_{Prim} und die Sekundärdrehzahl n_{Sek} gemessen und von der Steuerungsvorrichtung 17 eine Differenzdrehzahl bestimmt.

Insbesondere kann bei einer vom Lenkwinkel abhängigen Auslösung der Evaluierung die Kupplung 14 geöffnet werden, wenn die detektierte Sekundärdrehzahl n_{Sek} größer als die Primärdrehzahl n_{Prim} ist. Dadurch wird auf eine Betriebssituation reagiert, in welcher die Räder auf der Sekundärseite beginnen, sich schneller als die Räder auf der Primärseite zu drehen. Dabei ist der detektierte Lenkwinkel so groß, dass der etwaige Schlupf an den Rädern 5 der Hinterachse 3 nicht groß genug ist, um den Lenkwinkel zu kompensieren. Die Räder 4 an der Vorderachse müssen geometrisch bedingt größeren Spurkreisradien folgen als die Räder 5, sodass die Räder 4 der Vorderachse 2 bei geöffneter Kupplung 14 schneller drehen müssen als die Räder 5 der Hinterachse 3. Dies kann im Ergebnis der Evaluierung zur Entscheidung führen, den Allradbetrieb durch die Ansteuerung der Kupplung 14 abzuschalten.

Gemäß einer Weiterbildung kann zur automatischen Evaluierung in der detektierten Fahrsituation Q2 der Schaltzustand der Kupplung 14 bestimmt werden, wobei bei Detektion des geschlossenen Zustands der Kupplung 14 das Ventil 19 von der Steuerungsvorrichtung 17 angesteuert wird, um die Kupplung 14 zyklisch mit einem sich ändernden Kupplungsdruck zu beaufschlagen, bis die sich öffnende Kupplung schlupft. Der den Schlupf der Kupplung 14 auslösende Kupplungsdruck wird von einem Drucksensor 13 erfasst und an die Steuerungsvorrichtung 17 zur Auswertung übertragen. Der erfasste Wert für den Kupplungsdruck wird mit einem in der Steuerungsvorrichtung 17 hinterlegten Druck-Drehmoment-Verlauf der Kupplung 14 verglichen, um das übertragbare Drehmoment zu bestimmen. Ein regelmäßiges Öffnen der Kupplung 14 bildet eine Option, wenn Parameter wie die Drehzahldifferenz oder der Lenkwinkel nicht vorhanden oder nicht eindeutig sind. Tritt bei einem stufenweise oder kontinuierlich veränderten Kupplungsdruck Schlupf an der Kupplung 14 auf, kann sie noch ein definiertes Drehmoment übertragen, welches aus dem Druck-Drehmoment-Verlauf der Kupplung 14 bestimmbar ist.

Bei einem Wechsel von der Fahrsituation Q4 in Q2 kann die Kupplung 14 bereits geschlossen sein, wenn der Allradbetrieb beim Wechseln von der Fahrsituation Q4 in die Fahrsituation Q2 zugeschaltet wird. Die Möglichkeit der Evaluierung in der spezifischen Fahrsituation Q2 bei bereits geschlossener Kupplung 14 ist somit durch eine Modulation des Kupplungsdrucks nicht durchführbar, um die sich dabei einstellende Differenzdrehzahl zu bewerten.

Nach dem Wechsel aus der Fahrsituation Q4, in welcher die Kupplung 14 geöffnet ist, in die Fahrsituation Q2 kann beim Zuschalten des Allradbetriebs zumindest ein von dem Antriebsmotor 6 und/oder dem Fahrgetriebe 8 bereitgestellter Indikator von der Steuerungsvorrichtung 17 ausgewertet werden, durch welchen auf eine Änderung des Betriebszustands geschlossen wird. Für den zumindest einen Indikator ist ein Grenzwert in der Steuerungsvorrichtung 17 hinterlegt, durch dessen Überschreiten die automatische Evaluierung ausgelöst wird. Dabei wird eine Änderung des Schaltzustands der Kupplung 14 durch deren Ansteuerung durch die Steuerungsvorrichtung 17 vom geöffneten zum geschlossenen Schaltzustand detektiert. Der Wert des zumindest einen Indikators im Zeitpunkt des Schließens der Kupplung 14 in der Fahrsituation Q2 wird als Referenzwert gespeichert und mit nachfolgend bestimmten Werten des zumindest einen Indikators verglichen wird, welche während der Modulation des Kupplungsdrucks zur Evaluierung der Fahrsituation Q2 bestimmt werden.

Als zumindest ein Indikator kann das Drehmoment M am Ausgang des Fahrgetriebes 8 oder die Motorauslastung des Antriebsmotors 6 bestimmt werden. Wird die Motorauslastung als Indikator verwendet, ist es vorteilhaft zusätzlich einen Neigungswinkel der Arbeitsmaschine 1 zu bestimmen. Hierzu können die Signale des Neigungssensors 26 herangezogen werden.

**Bezugszeichenliste**

| | | | |
|---|---|---|---|
| 1 | Arbeitsmaschine | F_{S} | Schubkraft |
| 2 | Vorderachse | F_{Z} | Zugkraft |
| 3 | Hinterachse | M | Drehmoment |
| 4 | Rad | n_{Prim} | Primärdrehzahl |
| 5 | Rad | n_{Sek} | Sekundärdrehzahl |
| 6 | Antriebsmotor | RF | Rückwärtsfahrt |
| 7 | Antriebswelle | VF | Vorwärtsfahrt |
| 8 | Fahrgetriebe | V_{R} | Fahrgeschwindigkeit |
| 9 | Abtriebswelle | V_{V} | Fahrgeschwindigkeit |
| 10 | Differential | Q1 | Fahrsituation |
| 11 | Antriebsstrang | Q2 | Fahrsituation |
| 12 | Differential | Q3 | Fahrsituation |
| 13 | Drucksensor | Q4 | Fahrsituation |
| 14 | Kupplung | | |
| 15 | Welle | | |
| 16 | Welle | | |
| 17 | Steuerungsvorrichtung | | |
| 18 | Bussystem | | |
| 19 | Ventil | | |
| 20 | Hydraulikversorgung | | |
| 21 | Drehzahlsensor | | |
| 22 | Drehzahlsensor | | |
| 23 | Sensor | | |
| 24 | Sensor | | |
| 25 | Sensor | | |
| 26 | Neigungssensor | | |
| 27 | Zugkrafthyperbel | | |
| 28 | Erster Geschwindigkeitsbereich | | |
| 29 | Grenzgeschwindigkeit | | |
| 30 | Zweiter Geschwindigkeitsbereich | | |

## Patentansprüche

1. Verfahren zum Betrieb einer allradgetriebenen landwirtschaftlichen Arbeitsmaschine (1), mit einer Vorderachse (2) und einer angetriebenen Hinterachse (3), wobei die Vorderachse (2) für einen Allradbetrieb durch eine Kupplung (14) zugeschaltet wird, wobei die Kupplung (14) durch eine Steuerungsvorrichtung (17) angesteuert wird, **dadurch gekennzeichnet, dass** während des Betriebs der landwirtschaftlichen Arbeitsmaschine (1) eine Fahrsituation (Q1, Q2, Q3, Q4) durch eine Auswertung von Fahrsignalen und von Signalen, durch die auf das Auftreten von Schubkräften (F_{S}) oder Zugkräften (F_{Z}) an der landwirtschaftlichen Arbeitsmaschine (1) geschlossen wird, detektiert wird, und dass in Abhängigkeit von der bestimmten Fahrsituation (Q1, Q2, Q3, Q4) die Kupplung (14) zur Zuschaltung und Abschaltung des Allradbetriebes automatisch angesteuert wird.

2. Verfahren nach Anspruch 1, **dadurch gekennzeichnet, dass** in einer detektierten Fahrsituation (Q1), in welcher eine detektierte Fahrgeschwindigkeit (v_{R}, v_{V}) als Fahrsignal fahrtrichtungsunabhängig innerhalb eines ersten, den Stillstand der landwirtschaftlichen Arbeitsmaschine (1) umfassenden Geschwindigkeitsbereichs (28) liegt, die Kupplung (14) angesteuert wird, um den Allradbetrieb durchgängig zuzuschalten.

3. Verfahren nach Anspruch 1 oder 2, **dadurch gekennzeichnet, dass** in einer detektierten Fahrsituation (Q4), in welcher eine detektierte Fahrgeschwindigkeit (v_{R}, vv) als Fahrsignal oberhalb einer fahrtrichtungsunabhängigen Grenzgeschwindigkeit (29) liegt, die Kupplung (14) angesteuert wird, um den Allradbetrieb durchgängig abzuschalten.

4. Verfahren nach Anspruch 2 oder 3, **dadurch gekennzeichnet, dass** in einer detektierten Fahrsituation (Q3), in welcher die detektierte Fahrgeschwindigkeit(v_{V}) bei Vorwärtsfahrt (VF) innerhalb eines zweiten Geschwindigkeitsbereichs (30) liegt, welcher oberhalb des ersten Geschwindigkeitsbereichs (28) und unterhalb der Grenzgeschwindigkeit (29) liegt, und eine auf die landwirtschaftliche Arbeitsmaschine (1) ausgeübte Schubkraft (F_{S}) detektiert wird, oder in welcher die detektierte Fahrgeschwindigkeit (v_{R}) bei Rückwärtsfahrt (RF) innerhalb des zweiten Geschwindigkeitsbereichs (30) liegt, und eine auf die landwirtschaftliche Arbeitsmaschine (1) ausgeübte Zugkraft (Fz) detektiert wird, die Kupplung (14) angesteuert wird, um den Allradbetrieb zuzuschalten.

5. Verfahren nach Anspruch 4, **dadurch gekennzeichnet, dass** in einer detektierten Fahrsituation (Q2), in welcher die detektierte Fahrgeschwindigkeit (v_{V}) bei Vorwärtsfahrt (VF) innerhalb des zweiten Geschwindigkeitsbereichs (30) liegt und eine auf die landwirtschaftliche Arbeitsmaschine (1) ausgeübte Zugkraft (F_{Z}) detektiert wird oder in welcher die detektierte Fahrgeschwindigkeit (v_{R}) bei Rückwärtsfahrt (RF) innerhalb des zweiten Geschwindigkeitsbereichs (30) liegt und eine auf die landwirtschaftliche Arbeitsmaschine (1) ausgeübte Schubkraft (F_{S}) detektiert wird, eine automatische Evaluierung anhand der detektierten Fahrsituation (Q2) durchgeführt wird, um über die Ansteuerung der Kupplung (14) zur Zuschaltung oder Abschaltung des Allradbetriebes zu entscheiden.

6. Verfahren nach Anspruch 5, **dadurch gekennzeichnet, dass** zur automatischen Evaluierung der Schaltzustand der Kupplung (14) in der detektierten Fahrsituation (Q2) bestimmt wird, wobei bei Detektion des geschlossenen Zustands der Kupplung (14) ein Ventil (19) von der Steuerungsvorrichtung (17) angesteuert wird, um die Kupplung (14) bis zum Auftreten von Kupplungsschlupf mit einem Kupplungsdruck zu beaufschlagen, wobei zur Bestimmung des Auftretens des Kupplungsschlupfs mittels zweier Drehzahlsensoren (21, 22) eine Primärdrehzahl (n_{Prim}) und eine Sekundärdrehzahl (n_{Sek}) gemessen und durch die Steuerungsvorrichtung (14) eine Differenzdrehzahl bestimmt wird.

7. Verfahren nach Anspruch 6, **dadurch gekennzeichnet, dass** die Kupplung (14) in Abhängigkeit von einem in der Steuerungsvorrichtung (17) hinterlegten Drehzahlgrenzwert für die Differenzdrehzahl angesteuert wird, wobei bei Unterschreiten des Drehzahlgrenzwertes die Kupplung (14) durch Druckbeaufschlagung weiter geöffnet wird und bei Überschreiten des Drehzahlgrenzwertes die Kupplung (14) durch Druckreduzierung geschlossen wird.

8. Verfahren nach Anspruch 5 und 6, **dadurch gekennzeichnet, dass** ein Lenkwinkel bestimmt wird, durch den die automatische Evaluierung ausgelöst wird, wobei in Abhängigkeit von einem in der Steuerungsvorrichtung (17) hinterlegten Lenkwinkelgrenzwert und bei Detektion des geschlossenen Zustands der Kupplung (14) das Ventil (19) von der Steuerungsvorrichtung (17) angesteuert wird, um die Kupplung (14) bis zum Auftreten von Kupplungsschlupf mit einem Kupplungsdruck zu beaufschlagen, wobei zur Bestimmung des Auftretens des Kupplungsschlupfs mittels der zwei Drehzahlsensoren (21, 22) die Primärdrehzahl (n_{Prim}) und die Sekundärdrehzahl (n_{Sek}) gemessen werden und von der Steuerungsvorrichtung (17) eine Differenzdrehzahl bestimmt wird.

9. Verfahren nach Anspruch 8, **dadurch gekennzeichnet, dass** bei einer vom Lenkwinkel abhängigen Auslösung der Evaluierung die Kupplung (14) geöffnet wird, wenn die detektierte Sekundärdrehzahl(n_{Sek}) größer als die Primärdrehzahl (n_{Prim}) ist.

10. Verfahren nach Anspruch 5, **dadurch gekennzeichnet, dass** zur automatischen Evaluierung der Schaltzustand der Kupplung (14) in der detektierten Fahrsituation (2) bestimmt wird, wobei bei Detektion des geschlossenen Zustands der Kupplung (14) das Ventil (19) von der Steuerungsvorrichtung (17) angesteuert wird, um die Kupplung (14) zyklisch mit einem sich ändernden Kupplungsdruck zu beaufschlagen, bis die sich öffnende Kupplung (14) schlupft, und dass der den Schlupf auslösende Kupplungsdruck mit einem in der Steuerungsvorrichtung (17) hinterlegten Druck-Drehmoment-Verlauf der Kupplung (14) verglichen wird, um das durch die Kupplung (14) übertragbare Drehmoment zu bestimmen.

11. Verfahren nach einem der Ansprüche 5 bis 10, **dadurch gekennzeichnet, dass** die Evaluierung in regelmäßigen Zeitabständen während des Allradbetriebs erfolgt.

12. Verfahren nach Anspruch 5, **dadurch gekennzeichnet, dass** bei einem Zuschalten des Allradbetriebs zumindest ein von einem Antriebsmotor (6) und/oder einem Fahrgetriebe (8) bereitgestellter Indikator von der Steuerungsvorrichtung (17) ausgewertet wird, durch welchen auf eine Änderung des Betriebszustands geschlossen wird, wobei für den zumindest einen Indikator ein Grenzwert in der Steuerungsvorrichtung (17) hinterlegt ist, durch dessen Überschreiten die Evaluierung ausgelöst wird.

13. Verfahren nach Anspruch 12, **dadurch gekennzeichnet, dass** eine Änderung des Schaltzustands der Kupplung (14) vom geöffneten zum geschlossenen Schaltzustand detektiert wird, wobei der Wert des zumindest einen Indikators im Zeitpunkt des Schließens der Kupplung (14) als Referenzwert gespeichert und mit nachfolgend bestimmten Werten des zumindest einen Indikators verglichen wird, welche während der Modulation des Kupplungsdrucks zur Evaluierung der Fahrsituation (Q2) bestimmt werden.

14. Landwirtschaftliche Arbeitsmaschine (1), insbesondere Traktor, mit einer Vorderachse (2) und einer angetriebenen Hinterachse (3), wobei die Vorderachse (2) für einen Allradbetrieb durch eine Kupplung (14) zuschaltbar ist, sowie mit einer Steuerungsvorrichtung (17) zur Ansteuerung der Kupplung (14), **dadurch gekennzeichnet, dass** die Steuerungsvorrichtung (17) dazu eingerichtet ist, während des Betriebs der landwirtschaftlichen Arbeitsmaschine (1) eine Fahrsituation (Q1, Q2, Q3, Q4) durch eine Auswertung von Fahrsignalen und von Signalen, durch die auf das Auftreten von Schubkräften (F_{S}) oder Zugkräften (Fz) geschlossen wird, zu bestimmen und in Abhängigkeit von der bestimmten Fahrsituation (Q1, Q2, Q3, Q4) die Kupplung (14) zum Zuschalten und Abschalten automatisch anzusteuern.

15. Arbeitsmaschine (1) nach Anspruch 14, **dadurch gekennzeichnet, dass** die Arbeitsmaschine (1) zur Durchführung des Verfahrens nach einem der Ansprüche 1 bis 13 ausgeführt und eingerichtet ist.
